# EUROPÄISCHE PATENTSCHRIFT

(11) **EP 2 193 046 B1**
(45) Veröffentlichungstag und Bekanntmachung des Hinweises auf die Patenterteilung: **08.06.2011**
(21) Anmeldenummer: 07803594.6
(22) Anmeldetag: 24.09.2007
(51) Int. Cl.: B60Q 1/14, F21V 14/08

(54) **PROJEKTIONSSCHEINWERFERANORDNUNG FÜR FAHRZEUGE**
PROJECTION HEADLIGHT ARRANGEMENT FOR VEHICLES
SYSTÈME PROJECTEUR POUR VÉHICULES

(43) Veröffentlichungstag der Anmeldung: 09.06.2010
(73) Patentinhaber: Hella KGaA Hueck & Co., 59552 Lippstadt (DE); Volkswagen AG, 38436 Wolfsburg (DE)
(72) Erfinder: EHM, Matthias, 59558 Lippstadt (DE); SCHMIDT, Christian, 33106 Paderborn (DE)
(74) Vertreter: Ostermann, Thomas
(86) Internationale Anmeldenummer: PCT/EP2007/060070
(87) Internationale Veröffentlichungsnummer: WO 2009/039882

(56) Entgegenhaltungen:
- EP-A- 0 900 972
- EP-A- 1 769 968
- EP-A- 1 826 476
- DE-A1-102004 042 092
- DE-A1-102006 043 281

## Beschreibung

Die Erfindung betrifft eine Projektionsscheinwerferanordnung für Fahrzeuge nach dem Oberbegriff des Patentanspruchs 1.

Aus der DE 197 39 089 A1 ist ein Projektionsscheinwerfer für Fahrzeuge bekannt, der über eine Lichtquelle, einen Reflektor, eine Linse und über eine zwischen der Linse und dem Reflektor angeordnete Blendenwelle verfügt. Die Blendenwelle weist mehrere in horizontaler Richtung und quer zur optischen Achse der Linse verlaufende Brennlinien auf, welche jeweils eine Hell-Dunkel-Grenze einer vorgegebenen Lichtverteilung erzeugen. Die Blendenwelle ist um ihre eigene Achse drehbar in mehrere Drehstellungen verstellbar angeordnet, wobei jeweils eine einzige Brennlinie der Blendenwelle wirksam ist. Durch die Ausgestaltung der durchgehenden Brennlinien kann neben der Fernlicht- und Abblendlichtfunktion auch eine Stadtlicht-, Landstraßenlicht- und Autobahnlichtfunktion bereitgestellt werden. Die Anzahl der Brennlinien sind jedoch aufgrund der begrenzten Dimensionierung der Blendenwelle begrenzt. Eine verbesserte und an unterschiedliche Verkehrssituationen angepasste Lichtverteilung und die damit verbundene erhöhte Anzahl von Brennlinien erforderten einen weiteren Projektionsscheinwerfer, der einen erhöhten Bauraum bedingt.

Aus der EP 0 900 972 A ist eine Projektionsscheinwerferanordnung für Fahrzeuge mit einem linken Projektionsscheinwerfer und mit einem rechten Projektionsscheinwerfer bekannt. Die beiden Projektionsscheinwerfer weisen den gleichen Aufbau auf mit einem Reflektor, einer Blendenwelle und einer Linse. Allerdings werden jeweils Lichtverteilungen durch den linken und rechten Projektionsscheinwerfer erzeugt, die sich überdecken. Ein Lichtaussparungsbereich ist nicht vorgesehen.

Aus der EP 1 769 968 A ist eine Projektionsscheinwerferanordnung für Fahrzeuge mit einem linken Projektionsscheinwerfer und mit einem rechten Projektionsscheinwerfer bekannt. Der linke Projektionsscheinwerfer und der rechte Projektionsscheinwerfer weisen die gleichen Blendengeometrie auf, wobei Brennlinien derselben bezüglich einer zwischen dem linken Projektionsscheinwerfer und dem rechten Projektionsscheinwerfer-verlaufenden vertikalen Spiegelebene gespiegelt angeordnet sind. Eine von dem linken Projektionsscheinwerfer erzeugte Teillichtverteilung und eine von dem rechten Projektionsscheinwerfer erzeugte Teillichtverteilung überlagern sich zu einer Gesamtlichtverteilung, die einen Lichtaussparungsbereich aufweist. Zur Einstellung der Teillichtverteilungen werden plattenförmige Blenden verwendet, die in vertikaler und/oder horizontaler Richtung verschiebbar angeordnet sind.

Aufgabe der vorliegenden Erfindung ist es, eine Projektionsscheinwerferanordnung für Fahrzeuge derart weiterzubilden, dass platzsparend die Anzahl von Lichtverteilungen zur Anpassung an unterschiedliche Verkehrssituationen des Fahrzeugs vergrößert wird.

Zur Lösung dieser Aufgabe weist die Erfindung die Merkmale des Patentanspruchs 1 auf.

Der besondere Vorteil der Erfindung besteht darin, dass durch die zueinander abgestimmte unterschiedliche Ausgestaltung von Brennlinien bzw. Blendenwellen eines rechten und eines linken Projektionsscheinwerfers der Projektionsscheinwerferanordnung eine auf die Verkehrssituation angepasste Gesamtlichtverteilung erzeugt werden kann. Die für eine Verkehrssituation eingestellten Brennlinien des linken und des rechten Projektionsscheinwerfers bilden jeweils unterschiedliche Teillichtverteilungen, die durch Überlagerung einen Lichtaussparungsbereich bilden, der zu einem vorderseitigen Straßenraumbereich korrespondiert, in dem sich ein vorausfahrendes oder entgegenkommendes Fahrzeug befindet. Die Gesamtlichtverteilung entspricht einer herkömmlichen Fernlichtverteilung, in der lediglich ein solcher Straßenraumbereich abgeschattet wird, in dem sich das entgegenkommende oder vorausfahrende Fahrzeug befindet. Vorteilhaft kann hierdurch eine unerwünschte Blendung des anderen Fahrzeugs unter Beibehaltung einer größtmöglichen Fernlichtverteilung erzielt werden. Nach der Erfindung ist die Projektionsscheinwerferanordnung bzw. sind die Projektionsscheinwerfer mit einer Sensoreinheit und einer Steuereinheit gekoppelt, wobei mittels der Sensorseinheit die aktuelle Position des entgegenkommenden und/oder vorausfahrenden Fahrzeugs ermittelbar ist. In Abhängigkeit von den Positionsdaten kann dann die für diese Verkehrssituation passende Brennlinienkombination der Projektionsscheinwerfer eingestellt werden, so dass eine einem Fernlicht nahe kommende Gesamtlichtverteilung erzeugt wird, wobei lediglich der Straßenraum ausgespart wird, in dem sich das entgegenkommende und/oder vorausfahrende Fahrzeug befindet.

Nach einer bevorzugten Ausführungsform der Erfindung weisen die Brennlinien der Blendenwelle der linken und rechten Projektionsscheinwerfer jeweils auf einer der Fahrzeuglängsachse abgewandten Seite (äußeren Seite) einen in vertikaler Richtung gegenüber einem benachbarten Brennlinienabschnitt erhöhten äußeren Brennlinienabschnitt auf. Vorteilhaft kann hierdurch ein mittlerer Lichtaussparungsbereich der Gesamtlichtverteilung erzeugt werden, wobei Flanken des Lichtaussparungsbereiches durch eine von einer senkrecht zur Längsachse der Blendenwelle verlaufenden Sprungfläche der Blendenwelle erzeugt wird. Vorzugsweise ist der Lichtaussparungsbereich auf ein vorausfahrendes und/oder entgegenkommendes Fahrzeug ausgerichtet, so dass verkehrssituationsabhängig mit Ausnahme eines mittleren Straßenraumbereiches der gesamte Straßenraum entsprechend einer herkömmlichen Fernlichtverteilung ausgeleuchtet wird.

Nach einer bevorzugten Ausführungsform der Erfindung ist die Blendenwelle quer zur optischen Achse in horizontaler Richtung verschwenkbar gelagert. Vorteilhaft kann die Stellvorrichtung für eine Kurvenlichtfunktion des Projektionsscheinwerfers genutzt werden, bei der der Projektionsscheinwerfer um eine vertikale Achse verschwenkbar gelagert ist. Vorzugsweise kann ein Lichtaussparungsbereich in Abhängigkeit von der detektierten Lage des vorausfahrenden und/oder entgegenkommenden Fahrzeugs in horizontaler Richtung variiert werden, so dass stets eine relativ starke Ausleuchtung des Straßenraums im Umfang einer Fernlichtfunktion gegeben ist, wobei eine Blendung des vorausfahrenden bzw. entgegenkommenden Fahrzeugs verhindert wird. Für den Fahrzeugführer ergeben sich vorteilhaft keine starken Beleuchtungsdichteschwankungen bzw. starke Kontraste, da der Lichtaussparungsbereich vorzugsweise durch das entgegenkommende selbst leuchtende Fahrzeug ausgefüllt wird Vorzugsweise wird der Lichtaussparungsbereich dynamisch der aktuellen Position des entgegenkommenden Fahrzeugs nachgeführt, bis das entgegenkommende Fahrzeug das Fahrzeug des Fahrzeugführers seitlich passiert hat. Dann schaltet die Projektionsscheinwerferanordnung schlagartig auf die Fernlichtfunktion um, in der der gesamte Straßenraumbereich über die Breite ausgeleuchtet wird. Erst wenn wieder ein entgegenkommendes Fahrzeug detektiert wird, wird ein Lichtaussparungsbereich gebildet, der dem aktuell entgegenkommenden Fahrzeug nachgeführt wird.

Nach einer Weiterbildung der Erfindung ist die Blendenwelle derart ausgebildet, dass sie neben einem erhöhten äußeren Brennlinienabschnitt einen weiteren erhöhten inneren Blendenabschnitt aufweist. Die Blendenwelle weist somit mittig eine Ausnehmung auf, deren Brennlinie einen geringeren Abstand aufweist als die Brennlinien des äußeren und inneren Brennlinienabschnitts. Vorteilhaft können hierdurch Teillichtverteilungen erzeugt werden, die lediglich einen mittleren Leuchtfingerbereich aufweisen. Durch Überlagerung der ersten und zweiten Teillichtverteilung ergeben sich ein mittlerer Lichtaussparungsbereich und zwei äußere Lichtaussparungsbereiche, so dass die Entblendung von bis zu drei Fahrzeugen ermöglicht wird, nämlich einem im mittleren Bereich, einem im rechten Randbereich und einem im linken Randbereich.

Nach einer Weiterbildung der Erfindung weist die Brennlinienwelle einen äußeren Bremslinienabschnitt mit einem parallel zur Längsachse der Blendenwelle verlaufenden Finger auf, so dass durch Überlagerung der linken und rechten Teillichtverteilung ein Lichtaussparungsbereich auf einer Messwand umschlossen wird. Vorteilhaft kann hierdurch oberhalb eines Lichtaussparungsbereiches eine Ausleuchtung erfolgen, die zur Beleuchtung von beispielsweise Schilderobjekten dient.

Ausführungsbeispiele der Erfindung werden nachfolgend anhand der Zeichnungen näher erläutert.

Es zeigen:

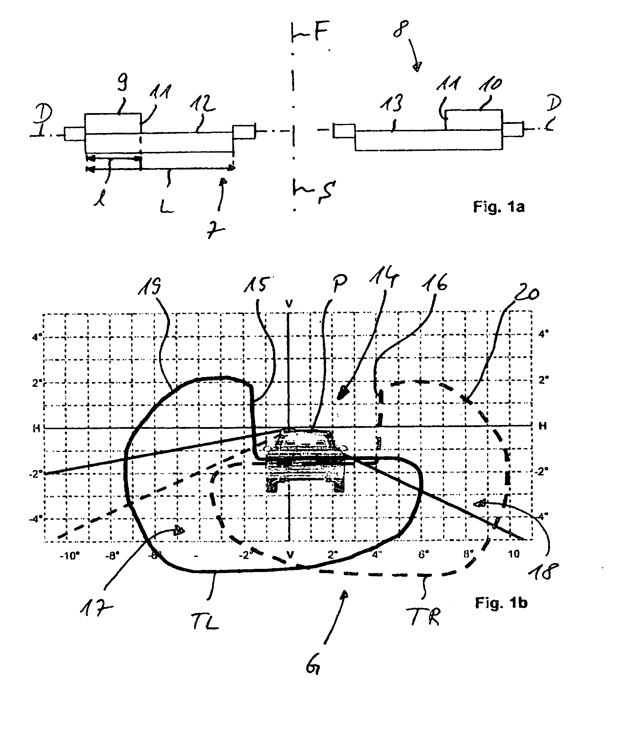

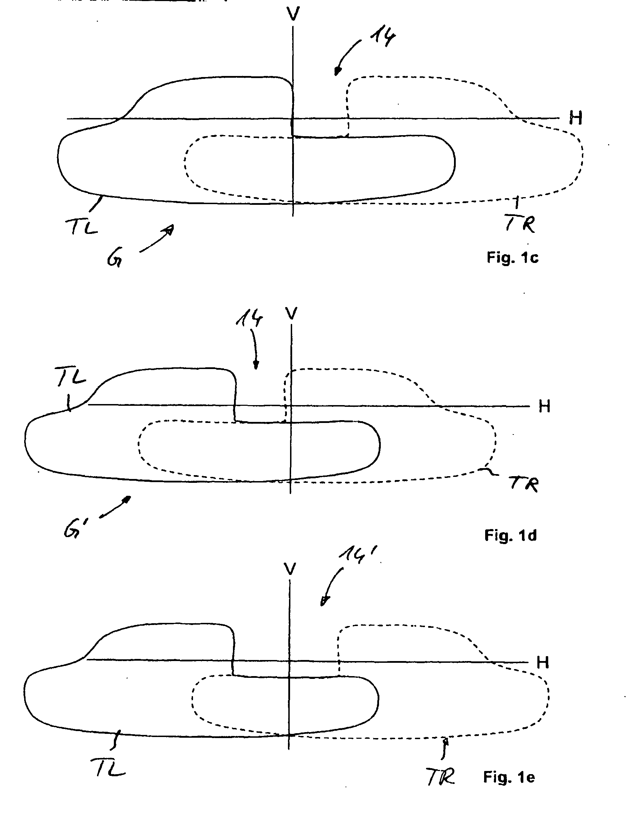

- Fig. 1 a: ein schematischer Vertikalschnitt durch eine Blendenwelle des linken Pro- jektionsscheinwerfers und des rechten Projektionsscheinwerfers,
- Fig. 1b: eine schematische Darstellung einer Lichtverteilung mit einem mittleren
- Fig. 1c: Lichtaussparungsbereich gemäß Figur 1a, die sich für den Fahrer des Fahrzeugs ergibt, eine schematische Darstellung einer Lichtverteilung, bei der die Blenden- wellen gemäß Figur 1 a bzw. die Projektionsscheinwerfer in Fahrtrichtung aus einer mittleren Stellung nach rechts verstellt worden sind,
- Fig. 1 d: eine schematische Darstellung einer Lichtverteilung, bei der die Blenden- wellen gemäß Figur 1a bzw. die Projektionsscheinwerfer in Fahrtrichtung aus einer mittleren Stellung nach links verstellt worden sind,
- Fig. 1 e: eine Darstellung einer Lichtverteilung mit den Blendenwellen gemäß Figur 1a, bei der die Breite des mittleren Lichtaussparungsbereiches durch Ver- stellen der Blendenweilen in Längsrichtung nach außen vergrößert worden ist,
- Fig. 2a: einen Vertikalschnitt durch Blendenwellen der Projektionsscheinwerfer mit einer Brennlinie nach einer zweiten Ausführungsform,
- Fig. 2b: eine schematische Darstellung einer sich für den Fahrer des Fahrzeugs ergebenden Lichtverteilung mit einem mittleren Lichtaussparungsbereich und mit zwei äußeren Lichtaussparungsbereichen, die durch Verwendung der Brennlinienkontur gemäß Figur 2a erzielbar ist,
- Fig. 3a: einen Vertikalschnitt durch eine Blendenwelle der Projektionsscheinwerfer mit einer Brennlinie nach einer weiteren Ausführungsform,
- Fig. 3b: eine schematische Darstellung einer sich für den Fahrer des Fahrzeugs ergebenden Lichtverteilung unter Bildung eines geschlossenen mittleren Lichtaussparungsbereiches unter Verwendung der in Figur 3a dargestell- ten Stellung der Blendenwelle,
- Fig. 4a: einen Vertikalschnitt durch eine Blendenwelle der Projektionsscheinwerfer
- Fig. 4b: mit einer Brennlinienkontur nach einer weiteren Ausführungsform, eine schematische Darstellung einer sich für den Fahrer des Fahrzeugs ergebenden Lichtverteilung unter Verwendung der in Figur 4a dargestell- ten Brennlinienkontur,
- Fig. 5: eine schematische Darstellung einer sich für den Fahrer des Fahrzeugs ergebenden Lichtverteilung unter Verwendung einer Blendenwelle mit der Brennlinienkontur gemäß Figur 1a, wobei die Brennlinilenkontur nach und nach durch Drehung der Blendenwelle abgesenkt wird, und
- Fig. 6: eine schematische Draufsicht auf ein Fahrzeug mit einer Projektions- scheinwerferanordnung bestehend aus einem rechten Projektionsschein- werfer und einem linken Projektionsscheinwerfer.

Eine erfindungsgemäße Projektionsscheinwerferanordnung 1 besteht im Wesentlichen aus einem linken Projektionsscheinwerfer 2 und einem rechten Projektionsscheinwerfer 3, die jeweils eckseitig in einer Karosserieöffnung eines Fahrzeugs bugseitig eingefasst sind.

Der linke Projektionsscheinwerfer 2 und der rechte Projektionsscheinwerfer 3 weisen jeweils einen schalenförmigen Reflektor 5 auf, an dessen ersten Brennort eine Lichtquelle 4 angeordnet ist. In der Nähe eines zweiten Brennpunktes des Reflektors 5 ist eine Linse 6 angeordnet. Der linke Projektionsscheinwerfer 2 und der rechte Projektionsscheinwerfer 3 weisen unterschiedlich konfigurierte Blendenwellen 7 bzw. 8 auf, die um eine quer zur optischen Achse verlaufende horizontale Drehachse D in mehrere Drehstellungen verschwenkbar gelagert sind. Zur Erzeugung von unterschiedlichen Lichtverteilungen weist die Mantelfläche der Blendenwellen 7, 8 für jede Drehstellung unterschiedliche Brennlinien auf.

Nach einer ersten Ausführungsform der Erfindung gemäß den Figuren 1a bis 1e sind die Blendenwellen 7 des linken Projektionsscheinwerfers 2 und die Blendenwelle 8 des rechten Projektionsscheinwerfers 3 in einer solchen Drehstellung, dass ein auf einer der Fahrzeuglängsachse F abgewandten Seite der Blendenwelle 7 bzw. 8 ein in vertikaler Richtung erhöhter äußerer Brennlinienabschnitt 9 bzw. 10 gebildet ist. Der äußere Brennlinienabschnitt 9, 10 ist über eine optisch nicht wirksame Sprungfläche 11 gegenüber einem inneren Brennlinienabschnitt 12 bzw. 13 parallel versetzt angeordnet. Die Brennlinienabschnitte 9, 12 des linken Projektionsscheinwerfers 2 und die Brennlinienabschnitte 10, 13 des rechten Projektionsscheinwerfers 3 sind bezüglich einer zwischen dem linken Projektionsscheinwerfer 2 und dem rechten Projektionsscheinwerfer 3 verlaufenden vertikalen Spiegelebene S gespiegelt angeordnet. Die Projektionsscheinwerfer 2, 3 weisen somit die gleiche Blendengeometrie, allerdings gespiegelt, auf.

Wie aus Figur 1b zu ersehen ist, überlagern sich eine durch den linken Projektionsscheinwerfer 2 erzeugte erste Teillichtverteilung (linke Teillichtverteilung TL) und eine durch den rechten Projektionsscheinwerfer 3 gebildete zweite Teillichtverteilung (rechte Teillichtverteilung TR - gestrichelt gezeichnet -) zu einer Gesamtlichtverteilung G, die in der Mitte einen mittleren Lichtaussparungsbereich 14 aufweist. Der mittlere Lichtaussparungsbereich 14 wird durch eine erste Flanke 15 der ersten Teillichtverteilung TL und eine zweite Flanke 16 der zweiten Teillichtverteilung TR begrenzt. Die Gesamtlichtverteilung G entspricht einer herkömmlichen Fernlichtverteilung mit dem Unterschied, dass ein mittlerer Bereich, in dem sich die Vertikale V erstreckt, von der Ausleuchtung ausgespart. Hierdurch kann die Blendung eines im mittleren Straßenraum befindlichen vorausfahrenden Fahrzeugs P verhindert werden, ansonsten aber eine umfassende Ausleuchtung des Straßenraums gewährleistet sein.

Die erste Teillichtverteilung TL und die zweite Teillichtverteilung TR weisen jeweils einen Basisleuchtbereich 17 bzw. 18 auf, wobei sich von dem Basisleuchtbereich 17 der linken Teillichtverteilung TL auf einer linken Seite ein linker Leuchtfingerbereich 19 und sich von dem Basisleuchtbereich 18 der rechten Teillichtverteilung TR auf einer rechten Seite ein rechter Leuchtfingerbereich 20 einen hinteren Straßenbereich ausleuchtet.

Wie aus Figur 1 a ersichtlich ist, ist die Länge I des äußeren Brennlichtabschnitts 9, 10 kleiner als die halbe Länge L der Blendenwelle 7, 8.

Den Blendenwellen 7, 8 kann jeweils eine Steuereinheit 21, 22 zugeordnet sein, mittels derer die Blendenwellen 7, 8 um eine vertikale Achse in horizontaler Richtung verstellbar werden. Die Blendenwellen 7, 8 werden somit senkrecht zur optischen Achse verschwenkt. Vorzugsweise verschwenken die Steuereinheiten 21, 22 nicht nur die Blendenwellen 7, 8 direkt, sondern den gesamten linken Projektionsscheinwerfer 2 bzw. rechten Projektionsscheinwerfer 3. Die Steuereinheiten 21, 22 können auch dazu eingesetzt werden, eine Kurvenlichtfunktion zu erzeugen. Hierbei wird ebenfalls der gesamte Projektionsscheinwerfer 2, 3 um eine vertikale Achse verschwenkt.

Zur Erzielung einer Gesamtlichtverteilung G gemäß Figur 1c, bei der sich die Blendenwellen 7, 8 in einer Drehstellung gemäß Figur 1a befinden, werden die Blendenwellen 7, 8 um eine vertikale Achse in Fahrtrichtung nach rechts verschwenkt. Zur Erzielung einer Gesamtlichtverteilung G' gemäß Figur 1d werden die Blendenwellen 7, 8 bzw. die Projektionsscheinwerfer 2, 3 entsprechend um die vertikale Achse in Fahrtrichtung nach links verschwenkt. Zur Bildung einer größeren Breite B des mittleren Lichtaussparungsbereiches 14 werden die Blendenwellen 7, 8 bzw. die Projektionsscheinwerfer 2, 3 in entgegengesetzte Richtungen verschwenkt, und zwar der linke Projektionsscheinwerfer 2 nach links und der rechte Projektionsscheinwerfer 3 nach rechts. Hierdurch kann ein verbreiterter Lichtaussparungsbereich 14' geschaffen werden, so dass die Blendung von breiteren vorausfahrenden Fahrzeugen oder mehreren nebeneinander angeordneten Fahrzeugen ermöglicht wird. Bei Verschwenken der Blendenwellen 7, 8 in Richtung der Fahrzeuglängsachse F kann es zu einer Überdeckung der Flanken 15, 16 der Teillichtverteilungen TL, TR kommen, so dass eine herkömmliche Fernlichtverteilung vorliegt.

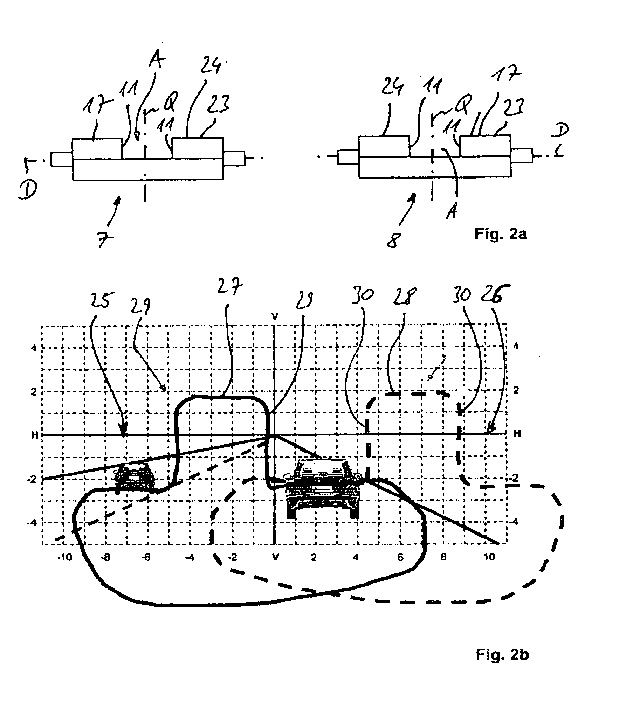

Nach einer weiteren Ausführungsform der Erfindung gemäß den Figuren 2a und 2b können diese eine weitere Brennlinie 23 aufweisen, die symmetrisch zu einer Quermittelebene Q der Blendenwelle 7, 8 verläuft. Hierbei weisen der linke Projektionsscheinwerfer 2 und der rechte Projektionsscheinwerfer 3 die gleiche Brennlinienkontur auf, wobei im Unterschied zu der Ausführungsform gemäß Figur 1a die Brennlinie 23 zwei Stufen aufweist, wobei neben dem erhöhten äußeren Brennlinienabschnitt 17 eine anschließende mittlere Ausnehmung A und daneben ein weiterer erhöhter innerer Brennlinienabschnitt 24 gebildet wird. Der erhöhte innere Brennlinienabschnitt 24 ermöglicht die Erzeugung eines äußeren Lichtaussparungsbereiches 25 der linken Teillichtverteilung TL und eines äußeren Lichtaussparungsbereiches 26 der rechten Teillichtverteilung TR. Vorteilhaft kann somit eine Blendung von weiteren Fahrzeugen vermieden werden, die sich in einem seitlichen Bereich des Straßenraums befinden. Die Gesamtlichtverteilung G weist somit auf einer 10 m entfernten Messwand einen stufenförmigen Verlauf auf, wobei ein linker Fernlichtbereich 27 und ein rechter Fernlichtbereich 28 Flanken 29, 30 aufweist, die mittels der Sprungflächen 11 der Brennlinie 23 erzeugt werden.

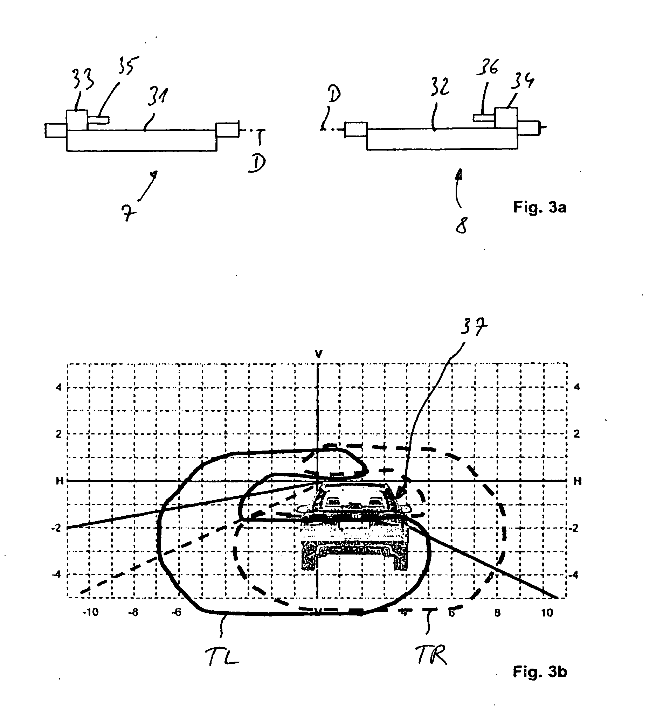

Nach einer weiteren Ausführungsform der Erfindung gemäß den Figuren 3a und 3b weisen die Blendenwellen 7, 8 eine Brennlinie 31, 32 auf, die um Unterschied zu dem Ausführungsbeispiel gemäß Figur 1 a einen äußeren Brennlinienabschnitt 33, 34 mit einem parallel zur Längsachse der Blendenwelle 7, 8 und in Richtung der Fahrzeuglängsachse F weisenden Finger 35, 36 auf. Hierdurch wird eine Gesamtlichtverteilung G gemäß Figur 3b erzeugt, die einen umschlossenen mittleren Lichtaussparungsbereich 37 aufweist. Hierdurch kann oberhalb eines vorausfahrenden Fahrzeugs eine Ausleuchtung erfolgen, die beispielsweise zur Beleuchtung eines Schilderobjekts dienen kann.

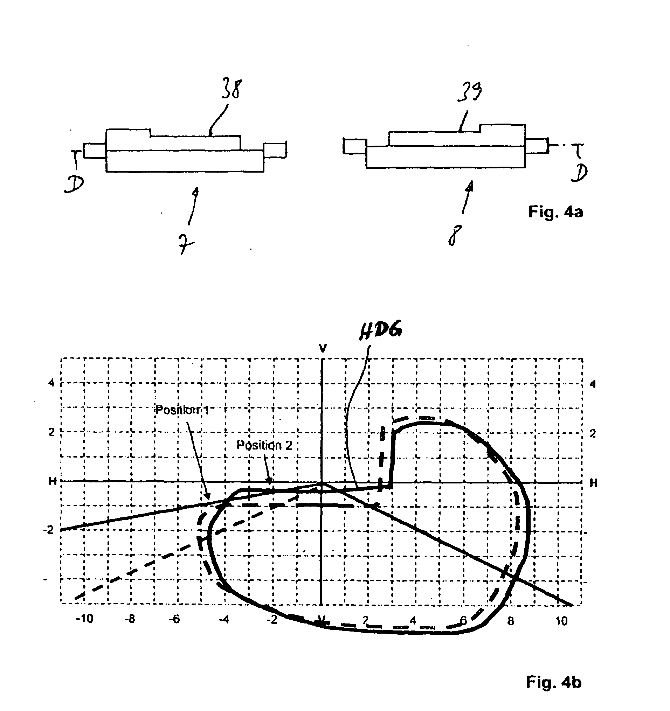

Nach einer weiteren Ausführungsform der Erfindung gemäß den Figuren 4a und 4b kann eine treppenförmige Brennlinie 38, 39 der linken Blendenwelle 7 bzw. der rechten Blendenwelle 8 vorgesehen sein, wobei die Stufen von einer der Fahrzeuglängsachse F zugewandten Seite nach außen hin in vertikaler Richtung ansteigen. Durch Längsverstellung der Blendenwelle 7, 8 kann der abgeschattete Bereich in der Höhe variiert werden, das heißt eine Hell-Dunkel-Grenze HDG kann beispielsweise bei einer Auffahrt von einer gestrichelten Position in eine höhere durchgestrichene Position verbracht werden.

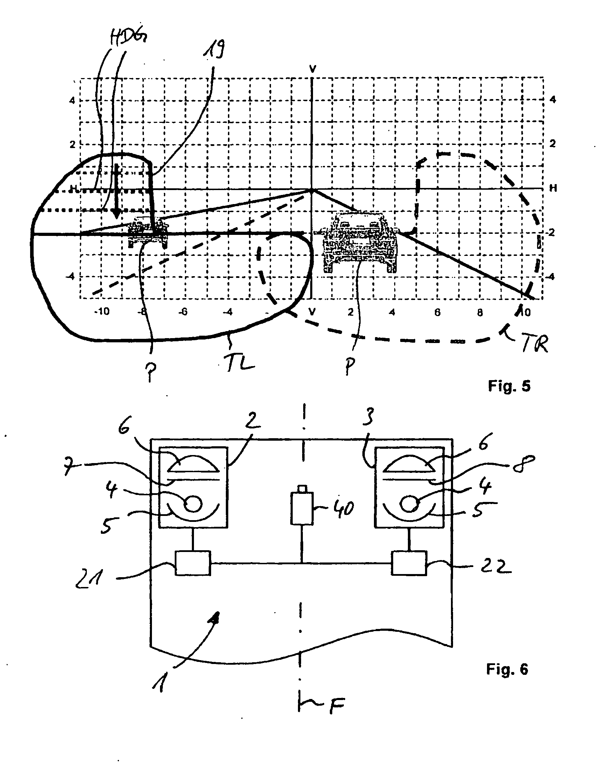

Nach einer weiteren Ausführungsform der Erfindung gemäß Figur 5 kann die Blendenlinie 9, 12 bzw. 10, 13 gemäß Figur 1 a durch synchrones Verschwenken der Projektionsscheinwerfer 2, 3 um eine horizontale Achse abgesenkt werden, bis eine Abblendlichtposition erreicht ist, in der die Hell-Dunkel-Grenze HDG des linken Fernlichtbereiches 19 in eine Abblendlichtposition verstellt ist. Die Verstellung der Blendenwelle 7, 8, wobei der innere Brennlinienabschnitt 12, 13 unverändert bleibt, erfolgt kontinuierlich, so dass der Entblendungsbereich nach und nach der aktuellen Verkehrssituation nachgeführt werden kann.

Zur Verstellung der Blendenwellen 7, 8 ist die Steuereinheit 21, 22 vorgesehen, an deren Eingang ein von einer Sensoreinheit 40 bereitgestelltes Sensorsignal liegt. Die Sensorseinheit 40 kann beispielsweise als ein Kamerasystem ausgebildet sein, das das gesamte Vorfeld (vorderseitiger Straßenraum) des Fahrzeugs erfasst und mögliche Fahrzeuge P detektiert. Die Sensoreinheit 40 ist derart aufgebaut, dass sie die Lage und/oder die Entfernung der Projektionsscheinwerfer 2, 3 zu einem entgegenkommenden und/oder vorausfahrenden Verkehrsteilnehmer (Fahrzeug) im Vorfeld erfasst. Die Steuereinheit 21 kann einen Mikrokontroller bzw. einen Mikroprozessor mit einem Speicher umfassen, in dem ein Lichtsteuerungsprogramm integriert ist.

Vorzugsweise erfolgt ein Nachführen des Lichtaussparungsbereiches 14, 14' in Abhängigkeit von der aktuellen Lage des entgegenkommenden bzw. vorausfahrenden Fahrzeugs, so dass zum einen eine Blendung des entgegenkommenden bzw. vorausfahrenden Fahrzeugs verhindert und zum anderen eine möglichst große Ausleuchtung des Straßenraums gemäß einer Fernlichtverteilung ermöglicht wird. Vorzugsweise werden der linke Projektionsscheinwerfer 2 und der rechte Projektionsscheinwerfer 3 dynamisch um die vertikale Achse bei einem entgegenkommenden Fahrzeug nach und nach nach links verschwenkt, bis das entgegenkommende Fahrzeug die Projektionsscheinwerferanordnung passiert hat. Dabei wird der Lichtaussparungsbereich 14, 14' dem entgegenkommenden Fahrzeug unter Überdeckung desselben nachgeführt. Vorzugsweise verbreitert sich der Lichtaussparungsbereich 14, 14' in Abhängigkeit von der Entfernung des entgegenkommenden Fahrzeugs, so dass der Lichtaussparungsbereich 14, 14' bei einem entgegenkommenden Fahrzeug in großer Entfernung eine relativ kleine Breite und bei einem entgegenkommenden Fahrzeug in geringer Entfernung eine relativ große Breite aufweist. Die Lage des Lichtaussparungsbereiches 14, 14' in horizontaler Richtung sowie die Breite B des Lichtaussparungsbereiches 14, 14' ist derart gewählt, dass das entgegenkommende Fahrzeug in den Lichtaussparungsbereich 14, 14' liegt. Eine breite Ausleuchtung des Straßenraumes für den Fahrzeugführer links und rechts des entgegenkommenden Fahrzeugs wird hierdurch gewährleistet. Dadurch, dass das entgegenkommende Fahrzeug im Lichtaussparungsbereich selbst Licht abstrahlt, ergibt sich für den Fahrzeugführer in horizontaler Richtung eine vollständig leuchtende Fläche.

### Bezugszeichenliste

- 1: Projektionsscheinwerferanordnung
- 2: linker Projektionsscheinwerfer
- 3: rechter Projektionsscheinwerfer
- 4: Lichtquelle
- 5: Reflektor
- 6: Linse
- 7: Blendenwelle
- 8: Blendenwelle
- 9: äußerer Brennlinienabschnitt
- 10: äußerer Brennlinienabschnitt
- 11: Sprungfläche
- 12: innerer Brennlinienabschnitt
- 13: innerer Brennlinienabschnitt
- 14, 14': mittlerer Lichtaussparungsbereich
- 15: erste Flanke
- 16: zweite Flanke
- 17: Basisleuchtbereich
- 18: Basisleuchtbereich
- 19: linker Fingerbereich
- 20: rechter Fingerbereich
- 21: Steuereinheit
- 22: Steuereinheit
- 23: Brennlinie
- 24: innerer Brennlinienabschnitt
- 25: äußerer Lichtaussparungsbereich
- 26: äußerer Lichtaussparungsbereich
- 27: linker Fernlichtlichtbereich
- 28: rechter Fernlichtbereich
- 29: Flanke
- 30: Flanke
- 31: Brennlinie
- 32: Brennlinie
- 33: äußerer Brennlinienabschnitt
- 34: äußerer Brennlinienabschnitt
- 35: Finger
- 36: Finger
- 37: mittlerer Lichtaussparungsbereich
- 38: Brennlinie
- 39: Brennlinie
- 40: Sensoreinheit
- A: Ausnehmung
- B: Breite des mittleren Lichtaussparungsbereichs
- D: Drehachse
- F: Fahrzeuglängsachse
- G: Gesamtlichverteilung
- HDG: Hell-Dunkel-Grenze
- I: Länge des äußeren Brennlichtabschnitts
- L: halbe Länge der Blendenwelle
- P: Fahrzeug
- Q: Quermittelebene
- S: Spiegelebene
- TL: linke Teillichtverteilung
- TR: rechte Teillichtverteilung
- V: Vertikale

## Patentansprüche

1. Projektionsscheinwerferanordnung für Fahrzeuge mit einem linken Projektionsscheinwerfer (2) und mit einem rechten Projektionsscheinwerfer (3), wobei der linke Projektionsscheinwerfer (2) und der rechte Projektionsscheinwerfer (3) die gleiche Blendengeometrie aufweisen, wobei Brennlinien (9, 10; 12, 13) derselben bezüglich einer zwischen dem linken Projektionsscheinwerfer (2) und dem rechten Projektionsscheinwerfer (3) verlaufenden vertikalen Spiegelebene (S) gespiegelt angeordnet sind, und dass die Brennlinien (9, 10; 12, 13) des linken Projektionsscheinwerfers (2) und des rechten Projektionsscheinwerfers (3) derart verlaufen, dass mittels der Brennlinie (9, 12) des linken Projektionsscheinwerfers (2) eine erste Teillichtverteilung (TL) und der Brennlinie (10, 13) des rechten Projektionsscheinwerfers (3) eine zweite Teillichtverteilung (TR) abgebildet wird, die sich zu einer Gesamtlichtverteilung (G) überlagern, wobei die Gesamtlichtverteilung (G) einen Lichtaussparungsbereich (14) aufweist, der von gegenüberliegenden seitlichen zwei Flanken (15, 16) begrenzt ist, wobei die erste Flanke (15) durch die erste Teillichtverteilung (TL) und die zweite Flanke (16) durch die zweite Teillichtverteilung (TR) gebildet ist,
**dadurch gekennzeichnet, dass** der linke Projektionsscheinwerfer (2) und der rechte Projektionsscheinwerfer (3) jeweils enthalten:
- einen zwei Brennorte aufweisenden schalenförmigen Reflektor (5),
- eine in einem ersten Brennort des Reflektors (5) angeordnete Lichtquelle (4),
- eine Linse (6), deren Brennpunkt in der Nähe des zweiten Brennpunktes des Reflektors (5) angeordnet ist,
- eine Blendenwelle (7, 8), die zwischen der Linse (6) und dem Reflektor (5) angeordnet ist und die um eine horizontale, quer zur optischen Achse verlaufenden Drehachse (D) in mehrere Drehstellungen verstellbar ist, wobei eine Mantelfläche der Blendenwelle (7, 8) für jede Drehstellung die Brennlinie (9, 10; 12, 13) aufweist, welche eine Hell-Dunkel-Grenze einer Lichtverteilung (G) erzeugt, und
dass eine Sensoreinheit (40) vorgesehen ist zur Erfassung des vorderseitig des Fahrzeugs erstreckenden Straßenraums, dass eine Steuereinheit (21) vorgesehen ist, an deren Eingang ein Sensorsignal der Sensoreinheit (40) anliegt, dass eine Stelleinheit zur Verstellung der Blendenwelle (7, 8) vorgesehen ist, an deren Eingang ein Steuersignal der Steuereinheit (21) derart anliegt, dass fahrsituationsabhängig Brennlinien der Blendenwellen (7, 8) eingestellt werden zur Bildung der von denselben erzeugten Teillichtverteilungen (TL, TR), so dass eine an die Verkehrssituation angepasste resultierende Gesamtlichtverteilung (G) erzeugt wird.

2. Projektionsscheinwerferanordnung nach Anspruch 1, **dadurch gekennzeichnet, dass** die Brennlinie der Blendenwelle (7, 8) auf einer der Fahrzeuglängsachse (F) abgewandten Seite einen in vertikaler Richtung gegenüber einem benachbarten Brennlinienabschnitt erhöhten äußeren Brennlinienabschnitt (9, 10) aufweist, mittels dessen ein in vertikaler Richtung von einem Basislichtbereich (17) der auf einer im Abstand von der Projektionsscheinwerferanordnung (1) positionierten Messwand dargestellten ersten Teillichtverteilung (TL) und zweiten Teillichtverteilung (TR) abragender Fernlichtfingerbereich (19, 20) gebildet wird, dessen Flanken (15, 16) einen solchen Abstand zueinander aufweisen, dass ein vorgegebener Straßenraumbereich (P) ausgespart wird.

3. Projektionsscheinwerferanordnung nach Anspruch 2, **dadurch gekennzeichnet, dass** der äußere Brennlinienabschnitt (9, 10) der Brennlinie weniger als die halbe Länge der Brennlinie lang ist.

4. Projektionsscheinwerferanordnung nach Anspruch 2 oder 3, **dadurch gekennzeichnet, dass** die Brennlinie (23) der Blendenwelle (7, 8) auf einer der Fahrzeuglängsachse (F) zugewandten Seite einen in vertikaler Richtung erhöhten inneren Brennlinienabschnitt aufweist, derart, dass am äußeren Rand der Gesamtlichtverteilung (G) äußere Lichtaussparungsbereiche (25, 26) gebildet werden.

5. Projektionsscheinwerferanordnung nach einem der Ansprüche 1 bis 4, **dadurch gekennzeichnet, dass** die erste Flanke (15) der ersten Teillichtverteilung (TL) und die zweite Flanke (16) der zweiten Teillichtverteilung (TR) durch eine senkrecht zu einer Längsachse der Blendenwelle (7, 8) verlaufende Sprungfläche (11) derselben erzeugt wird, wobei die Sprungfläche (11) in einer die optische Achse enthaltenen Vertikalebene (V) verläuft.

6. Projektionsscheinwerferanordnung nach einem der Ansprüche 1 bis 5, **dadurch gekennzeichnet, dass** mindestens die eine Blendenwelle (7, 8) quer zur optischen Achse in horizontaler Richtung verschwenkbar gelagert ist, derart, dass in einer zu der Fahrzeuglängsachse (F) weiter entfernt angeordneten äußeren Stellung der Blendenwelle (7, 8) die Gesamtlichtverteilung (G) mit einem mittleren Lichtaussparungsbereich (14) und in einer zu der Fahrzeuglängsachse (F) weniger weit entfernt angeordneten inneren Stellung der Blendenwelle (7, 8) eine Fernlichtverteilung erzeugt wird.

7. Projektionsscheinwerferanordnung nach einem der Ansprüche 1 bis 6, **dadurch gekennzeichnet, dass** der äußere Brennlinienabschnitt (9, 10) und/oder der innere Brennlinienabschnitt sprungförmig ausgebildet ist.

8. Projektionsscheinwerferanordnung nach einem der Ansprüche 1 bis 7, **dadurch gekennzeichnet, dass** der äußere Brennlinienabschnitt (33, 34) fingerförmig mit einer parallel zur Längsachse der Blendenwelle (7, 8) verlaufenden Finger (35, 36) ausgebildet ist, derart, dass eine Gesamtlichtverteilung (G) mit einem umschlossenen Lichtaussparungsbereich (37) auf der Messwand abgebildet wird.

9. Projektionsscheinwerferanordnung nach einem der Ansprüche 1 bis 8, **dadurch gekennzeichnet, dass** die Blendenwelle (7, 8) oder der Projektionsscheinwerfer (2,3) in Abhängigkeit von dem die aktuelle Position des entgegenkommenden und/oder vorausfahrenden Fahrzeugs ermittelnden Sensorsignals um eine horizontale Achse verschwenkt wird, so dass der entsprechende Brennlinienabschnitt (38, 39) kontinuierlich abgesenkt wird, bis die die Gesamtlichtverteilung (G) von einer Fernlichtposition in eine Abblendlichtposition verstellt ist.

10. Projektionsscheinwerferanordnung nach einem der Ansprüche 1 bis 9, **dadurch gekennzeichnet, dass** der linke Projektionsscheinwerfer (2) und der rechte Projektionsscheinwerfer (3) um eine vertikale Achse derart verschwenkbar gelagert sind , dass in Abhängigkeit von dem die aktuelle Position des entgegegenkommenden und/oder vorausfahrenden Fahrzeugs ermittelten Sensorsignals der Lichtaussparungsbereich (14) unter Überdeckung der Position des Fahrzeugs nachgeführt wird.

## Claims

1. Projection headlight arrangement for motor vehicles, having a left-hand projection headlight (2) and a right-hand projection headlight (3), the left-hand projection headlight (2) and the right-hand projection headlight (3) having the same diaphragm, geometry, focal lines (9, 10; 12, 13) thereof being arranged in mirror image with reference to a vertical mirror plane (S) running between the left-hand projection headlight (2) and the right-hand projection headlight (3), and the focal lines (9, 10; 12, 13) of the left-hand projection headlight (2) and of the right-hand projection headlight (3) running in such a way that a first partial light distribution (TL) is imaged by means of the focal line (9, 12) of the left-hand projection headlight (2), and a second partial light distribution (TR) is imaged by means of the focal line (10, 13) of the right-hand projection headlight (3), which partial light distributions superpose to form an overall light distribution (G), the overall light distribution (G) having a light gap region (14) which is bounded by two oppositely situated lateral flanks (15, 16), the first flank (15) being formed by the first partial light distribution (TL), and the second flank (16) being formed by the second partial light distribution (TR),
**characterized in that** the left-hand projection headlight (2) and the right-hand projection headlight (3) respectively include:
- a dish-shaped reflector (5) having two focal positions,
- a light source (4) arranged at a first focal position of the reflector (5),
- a lens (6) whose focal point is arranged in the vicinity of the second focal point of the reflector (5), and
- a diaphragm shaft (7, 8) which is arranged between the lens (6) and the reflector (5) and which can be adjusted in a plurality of rotary positions about a horizontal rotary axis (D) running transverse to the optical axis, a lateral surface of the diaphragm shaft (7, 8) having, for each rotary position, the focal line (9, 10; 12, 13), which produces a light-dark boundary of a light distribution (G), and
**in that** a sensor unit (40) is provided for detecting the road space extending in front of the vehicle, **in that** a control unit (21) is provided, at whose input a sensor signal of the sensor unit (40) is present, and **in that** provided for adjusting the diaphragm shaft (7, 8) is an actuating unit, at whose input a control signal of the control unit (21) is present in such a way that focal lines of the diaphragm shafts (7, 8) are set as a function of the driving situation in order to form the partial light distributions (TL, TR) produced by said diaphragm shafts so that a resulting overall light distribution (G) is produced which is adapted to the traffic situation.

2. Projection headlight arrangement according to Claim 1, **characterized in that** the focal line of the diaphragm shaft (7, 8) on a side averted from the vehicle longitudinal axis (F) has an outer focal line section (9, 10) which is increased in a vertical direction by comparison with a neighbouring focal line section and by means of which there is formed a main beam finger region (19, 20) projecting in a vertical direction from a base light region (17) of the first partial light distribution (TL), represented on a measuring wall positioned at a spacing from the projection headlight arrangement (1) and of the second partial light distribution (TR), the flanks (15, 16) of which main beam finger region (19, 20) have a spacing from one another such that a prescribed road space region (P) is left out.

3. Projection headlight arrangement according to Claim 2, **characterized in that** the outer focal line section (9, 10) of the focal line is less than half the length of the focal line.

4. Projection headlight arrangement according to Claim 2 or 3, **characterized in that** the focal line (23) of the diaphragm shaft (7, 8) on a side facing the vehicle longitudinal axis (F) has an inner focal line section increased in a vertical direction in such a way that outer light gap regions (25, 26) are formed on the outer edge of the overall light distribution (G).

5. Projection headlight arrangement according to one of Claims 1 to 4, **characterized in that** the first flank (15) of the first partial light distribution (TL), and the second flank (16) of the second partial light distribution (TR) are produced by a step surface (11) of the diaphragm shaft (7, 8) which step surface (11) runs perpendicular to a longitudinal axis of the diaphragm shaft (7, 8), the step surface (11) running in a vertical plane (V) containing the optical axis.

6. Projection headlight arrangement according to one of Claims 1 to 5, **characterized in that** at least the one diaphragm shaft (7, 8) is supported pivotably transverse to the optical axis in a horizontal direction in such a way that, in an outer position of the diaphragm shaft (7, 8) arranged further removed from the vehicle longitudinal axis (F), the overall light distribution (G) is produced with a light gap region (14) in the middle, and in an inner position of the diaphragm shaft (7, 8) arranged not as far removed from the vehicle longitudinal axis (F) a main beam distribution is produced.

7. Projection headlight arrangement according to one of Claims 1 to 6, **characterized in that** the outer focal line section (9, 10) and/or the inner focal line section are/is designed like a step.

8. Projection headlight arrangement according to one of Claims 1 to 7, **characterized in that** the outer focal line section (33, 34) is designed with a finger (35, 36) running parallel to the longitudinal axis of the diaphragm shaft (7, 8) in such a way that an overall light distribution (G) is imaged on the measuring wall with an enclosed light gap region (37).

9. Projection headlight arrangement according to one of Claims 1 to 8, **characterized in that** the diaphragm shaft (7, 8) or the projection headlight (2, 3) is pivoted about a horizontal axis as a function of the sensor signal determining the current position of the oncoming vehicle and/or vehicle travelling in front, so that the corresponding focal line section (38, 39) is continuously lowered until the overall light distribution (G) is adjusted from a main beam position into a dipped beam position.

10. Projection headlight arrangement according to one of Claims 1 to 9, **characterized in that** the left-hand projection headlight (2) and the right-hand projection headlight (3) are supported pivotably about a vertical axis in such a way that the light gap region (14) is guided to cover the position of the vehicle as a function of the sensor signal determining the current position of the oncoming vehicle and/or vehicle travelling in front.

## Revendications

1. Système de phares de projection pour véhicule avec un phare de projection gauche (2) et avec un phare de projection droit (3), le phare de projection gauche (2) et le phare de projection droit (3) présentant la même géométrie d'éblouissement, les lignes focales (9, 10 ; 12, 13) étant disposées symétriquement par rapport à un plan de symétrie vertical (S) s'étendant entre le phare de projection gauche (2) et le phare de projection droit (3), et les lignes focales (9, 10 ; 12, 13) du phare de projection gauche (2) et du phare de projection droit (3) s'étendant de manière à produire une première répartition de lumière partielle (TL) au moyen de la ligne focale (9, 12) du phare de projection gauche (2), et une deuxième répartition de lumière partielle (TR) au moyen de la ligne focale (10, 13) du phare de projection droit (3), qui se superposent à une répartition de lumière globale (G), la répartition de lumière globale (G) présentant un domaine de lumière réduite (14) limité par deux flancs latéraux opposés (15, 16), le premier flanc (15) étant formé par la première répartition de lumière partielle (TL) et le deuxième flanc (16) par la deuxième répartition de lumière partielle (TR),
**caractérisé en ce que** le phare de projection gauche (2) et le phare de projection droit (3) contiennent respectivement :
- un réflecteur en forme de bol (5) présentant deux emplacements focaux,
- une source lumineuse (4) disposée à un premier emplacement focal du réflecteur (5),
- une lentille (6) dont le point focal est disposé à proximité du deuxième emplacement focal du réflecteur (5),
- un arbre de diaphragme (7, 8) disposé entre la lentille (6) et le réflecteur (5), et réglable en rotation en plusieurs positions autour d'un axe de rotation (D) horizontal se propageant transversalement par rapport à l'axe optique, une surface de l'enveloppe de l'arbre de diaphragme (7, 8) présentant pour chaque position en rotation, la ligne focale (9, 10 ; 12, 13) générant une frontière claire-obscure d'une répartition de lumière (G), et
**en ce qu'**une unité de capteur (40) est prévue pour enregistrer l'espace routier s'étendant vers l'avant du véhicule, **en ce qu'**une unité de commande (21) est prévue à l'entrée de laquelle s'applique un signal de capteur de l'unité de capteur (40), **en ce qu'**une unité de réglage est prévue pour le réglage de l'arbre de diaphragme (7, 8) à l'entrée de laquelle s'applique un signal de commande de l'unité de commande (21) de manière à régler les lignes focales des arbres de diaphragmes (7, 8) en fonction des situations de conduite pour former la répartition de lumière partielle (TL, TR) générée par celles-ci de manière à générer une répartition de lumière globale (G) résultante adaptée à la situation de trafic.

2. Système de phares de projection selon la revendication 1, **caractérisé en ce que** la ligne focale de l'arbre de diaphragme (7, 8) présente une section externe surélevée de la ligne focale (9, 10) dans une direction verticale par rapport à une section voisine de la ligne focale, sur un côté s'éloignant de l'axe longitudinal (F) du véhicule ce qui permet de former un domaine en forme de doigt de la lumière des phares à longue portée (19, 20) s'éloignant de la première répartition de lumière partielle (TL) et de la deuxième répartition de lumière partielle (TR) représentées verticalement à partir d'un domaine de lumière de base (17) sur une paroi de mesure située à une certaine distance du système de phares de projection (1), dont les flancs (15, 16) présentent un espacement mutuel permettant de préserver un domaine défini de l'espace routier (P).

3. Système de phares de projection selon la revendication 2, **caractérisé en ce que** la section externe de la ligne focale (9, 10) a une longueur inférieure à la demi-longueur de la ligne focale.

4. Système de phares de projection selon la revendication 2 ou 3, **caractérisé en ce que** la ligne focale (23) de l'arbre de diaphragme (7, 8) présente une section interne surélevée de la ligne focale dans une direction verticale sur un côté dirigé vers l'axe longitudinal (F) du véhicule de manière à former des domaines externes de lumière réduite (25, 26) sur le bord externe de la répartition de lumière globale (G).

5. Système de phares de projection selon une des revendications 1 à 4, **caractérisé en ce que** le premier flanc (15) de la première répartition de lumière partielle (TL) et le deuxième flanc (16) de la deuxième répartition de lumière partielle (TR) sont générés par une surface de saut (11) se propageant perpendiculairement à un axe longitudinal de l'arbre de diaphragme (7, 8) de celle-ci, la surface de saut (11) se propageant dans un plan vertical (V) contenant l'axe optique.

6. Système de phares de projection selon une des revendications 1 à 5, **caractérisé en ce que** l'arbre de diaphragme (7, 8) au moins est monté de manière à pouvoir pivoter dans la direction horizontale à travers l'axe optique, de manière à générer la répartition de lumière globale (G) avec un domaine central de lumière réduite (14) dans une position externe de l'arbre de diaphragme (7, 8) plus éloignée de l'axe longitudinal du véhicule (F) et une répartition de la lumière des phares à longue portée dans une position interne de l'arbre de diaphragme (7, 8) moins éloignée de l'axe longitudinal du véhicule (F).

7. Système de phares de projection selon une des revendications 1 à 6, **caractérisé en ce que** la section externe de la ligne focale (9, 10) et/ou la section interne de la ligne focale est réalisée en forme de saut.

8. Système de phares de projection selon une des revendications 1 à 7, **caractérisé en ce que** la section externe de la ligne focale (33, 34) est réalisée avec un doigt (35, 36) se propageant parallèlement à l'axe longitudinal de l'arbre de diaphragme (7, 8) de manière à représenter sur la paroi de mesure, une répartition de lumière globale (G) avec un domaine enclavé de lumière réduite (37).

9. Système de phares de projection selon une des revendications 1 à 8, **caractérisé en ce que** l'arbre de diaphragme (7, 8) ou le phare de projection (2, 3) pivote autour d'un axe horizontal en fonction du signal de capteur fournissant la position courante du véhicule qui arrive en sens opposé et/ou de celui qui précède de manière à abaisser de manière continue la section correspondante de la ligne focale (38, 39) jusqu'à ce que le réglage de la répartition de lumière globale (G) ait passé d'une position phares à longue portée à une position de feux de croisement.

10. Système de phares de projection selon une des revendications 1 à 9, **caractérisé en ce que** le phare de projection gauche (2) et le phare de projection droit (3) sont montés de manière à pouvoir pivoter selon un axe vertical pour pouvoir suivre le domaine de lumière réduite (14) en recouvrant la position du véhicule en fonction du signal de capteur fournissant la position courante du véhicule qui arrive en sens opposé et/ou de celui qui précède.
